# EUROPEAN PATENT APPLICATION

(11) **EP 4 528 538 A1**
(43) Date of publication of application: **26.03.2025**
(21) Application number: 22951391.6
(22) Date of filing: 18.07.2022
(51) Int. Cl.: G06F 16/36

(54) **INDUSTRIAL KNOWLEDGE GRAPH DISPLAY METHOD, DEVICE, MEDIUM, AND PRODUCT**

(71) Applicant: Siemens Aktiengesellschaft, 80333 München (DE)
(72) Inventor: CHE, Xiao Yin, Beijing 100097 (CN); NI, Kun Yi, Beijing 100088 (CN); LIU, Wei Chuan, Beijing 100096 (CN); LI, Yang, Nanjing City, Jiangsu 210000 (CN)
(74) Representative: Isarpatent
(86) International application number: PCT/CN2022/106260
(87) International publication number: WO 2024/016112

(57) **Abstract**

Embodiments of the present disclosure relate to an industrial knowledge graph display method, a device, a medium, and a product. The industrial knowledge graph display method includes: determining a six-cornered grid layout used for an industrial knowledge graph, where in the six-cornered grid layout, each non-periphery grid is surrounded by six grids, and centers of the six grids form a hexagon. The method further includes: displaying a plurality of nodes referring to industrial concepts in the industrial knowledge graph at respective centers of a plurality of grids in the six-cornered grid layout; and displaying a plurality of edges between the plurality of nodes based on a semantic relationship between the plurality of nodes by using a straight line, a broken line, and/or a curve. According to the embodiments of the present disclosure, the six-cornered grid layout is used to assist in displaying the industrial knowledge graph, a node is displayed at a center position of each grid, and edges between nodes are displayed by using lines in a plurality of optional manners, so that content of the industrial knowledge graph can be presented completely and clearly, thereby greatly improving user experience during display of the knowledge graph.

## Description

### TECHNICAL FIELD

Embodiments of the present disclosure relate to the computer field, and more specifically, to an industrial knowledge graph display method, a device, a medium, and a product.

### BACKGROUND

A knowledge graph (KG) is a structured semantic knowledge base, and is used for describing concepts and interrelationships thereof in the physical world in a visualized form. The knowledge graph is essentially a semantic network that reveals relationships between entities. Generally, there are a plurality of nodes in the knowledge graph, one node may represent one entity, some nodes are connected together by using directed edges or undirected edges, and the edges may represent relationships between the nodes. Related technologies implemented by using the knowledge graph involve knowledge extraction (such as entity extraction, relationship extraction, and attribute extraction), knowledge fusion, knowledge processing, and the like.

An industrial knowledge graph is a knowledge graph constructed by performing knowledge classification on various types of industrial data by using knowledge graph, natural language processing, and/or artificial intelligence (AI) technologies, to enable industrial decision-making or production. The knowledge graph has become a hot topic when AI is discussed in the industry, and shows high potential and capability in systematically organizing various types of knowledge collected from various aspects of a production process. By appropriately analyzing well-organized industrial knowledge, more efficient and better management and innovative ideas can be realized. Currently, construction and application of the industrial knowledge graph are extensively studied and have made some research progresses.

### SUMMARY

As described above, although the knowledge graph has some applications in the industry, it is noted in this application that a conventional industrial knowledge graph presentation manner has a series of problems such as an excessively large information density, overlapping visual elements, and a rigid overall layout. Therefore, the conventional industrial knowledge graph has poor user experience.

Therefore, the embodiments of the present disclosure provide an industrial knowledge graph display method, a device, a medium, and a product. According to the embodiments of the present disclosure, a six-cornered grid layout is used to assist in display of the industrial knowledge graph, each node is displayed at a center position of each grid, and edges between nodes are displayed by using lines in a plurality of optional manners, so that content of the industrial knowledge graph can be presented completely and clearly, thereby greatly improving user experience of a user when viewing the knowledge graph.

According to a first aspect of the present disclosure, an industrial knowledge graph display method is provided. The method includes: determining a six-cornered grid layout used for an industrial knowledge graph, where in the six-cornered grid layout, a non-periphery grid is surrounded by six grids, and centers of the six grids form a hexagon; displaying a plurality of nodes in the industrial knowledge graph at respective centers of a plurality of grids in the six-cornered grid layout; and displaying a plurality of edges between the plurality of nodes based on a semantic relationship between the plurality of nodes by using at least one of the following connection lines: a straight line, a broken line, or a curve. In this way, the six-cornered grid layout is used to assist in display of the industrial knowledge graph, each node is displayed at a center position of each grid, and edges between nodes are displayed by using a plurality of optional connection lines, so that content of the industrial knowledge graph can be presented completely and clearly, thereby greatly improving user experience during display of the knowledge graph.

In some embodiments, the non-periphery grid and the six grids are all hexagons, and the hexagon formed by the centers of the six grids is an equilateral hexagon. A hexagonal honeycomb is formed by using hexagons, so that it can be ensured that hexagons formed adjacent to the center of the grid are equilateral hexagons, and user experience is effectively ensured.

In some embodiments, the non-periphery grid and the six grids are all quadrilaterals, and the hexagon formed by the centers of the six grids is a non-equilateral hexagon. Although the grids are arranged in quadrilaterals, through an interleaved arrangement, connection lines between centers of six adjacent grids of each grid can also form a hexagon. This improves applicability of the solution.

In some embodiments, the displaying a plurality of nodes in the industrial knowledge graph at respective centers of a plurality of grids in the six-cornered grid layout includes: placing a first node in a first grid of the plurality of grids; placing a second node in a second grid of the plurality of grids, where the second grid is adjacent to the first grid; and placing a third node in a third grid of the plurality of grids, where the third grid is not adjacent to the first grid or the second grid. In this way, the node may be located in any grid on the checkerboard, and any two nodes may be located in adjacent grids or non-adjacent grids, so that the nodes are not particularly dense and crowded.

In some embodiments, the method further includes: displaying the industrial knowledge graph in a pseudo three-dimensional or three-dimensional form by skewing and rotating the six-cornered grid layout. The pseudo three-dimensional or three-dimensional form is provided, so that the user experience of the industrial knowledge graph can be further improved.

In some embodiments, the method further includes: displaying the industrial knowledge graph in a global view, where in the global view, text of the plurality of nodes and of the plurality of edges is hidden; displaying the industrial knowledge graph in a local view in response to receiving a first user input for a first node of the plurality of nodes in the global view, where in the local view, text of at least one of a node and an edge associated with the first node is displayed; and displaying the industrial knowledge graph in a focused view in response to receiving a second user input for the first node in the local view, where in the focused view, description information of the first node is displayed through a window. The three progressive views are set, so that content of the knowledge graph can be viewed from different perspectives. This can improve overall experience of the knowledge graph, and graph information can also be viewed in a more detailed and more focused manner.

In some embodiments, the method further includes: displaying the industrial knowledge graph in the local view in response to receiving a third user input in the focused view; and displaying the industrial knowledge graph in the global view in response to receiving a fourth user input in the local view. A manner of switching between different views is set, so that flexible switching can be implemented.

In some embodiments, the method further includes: displaying the industrial knowledge graph in the focused view in response to receiving a fifth user input for the first node in the global view; and displaying the industrial knowledge graph in the global view in response to receiving a sixth user input in the focused view. In this way, switching can be directly performed between the global view and the focused view across the local view in the middle, thereby improving view switching efficiency.

In some embodiments, the displaying the industrial knowledge graph in a global view includes: displaying a first-type node in the plurality of nodes as a first icon; and displaying a second-type node in the plurality of nodes as a second icon, where the second icon is different from the first icon. In this manner, an overall situation of all nodes can be presented more intuitively in the global view.

In some embodiments, the displaying the industrial knowledge graph in a global view includes: aggregating the plurality of nodes into a plurality of groups; and displaying the plurality of groups in the global view in a point cloud manner. In a manner of clustering and grouping, a clustering relationship between nodes can be quickly obtained, and an overall situation of the knowledge graph is more conveniently understood.

In some embodiments, the displaying the industrial knowledge graph in a local view includes: determining a first group of related nodes within a predetermined hops of the first node; and displaying the first group of related nodes and text thereof in the local view. Only nodes near a central node are displayed, so that nodes related to the central node can be displayed, and presentation of non-related nodes can be reduced, thereby improving efficiency of knowledge display.

In some embodiments, the displaying the industrial knowledge graph in a local view further includes: in response to receiving selection for a second node in the local view, determining a second group of related nodes within a predetermined hops of the second node; and displaying the second group of related nodes and text thereof in the local view. In this way, the central node can be freely and conveniently switched.

In some embodiments, the displaying the industrial knowledge graph in a focused view includes: highlighting the first node compared with another displayed node in the focused view. The central node is focused on, so that related information of the central node on which the user is currently focused can be better emphasized.

According to a second aspect of the present disclosure, an electronic device is provided. The electronic device includes: one or more processors; and a memory, configured to store computer-executable instructions. When the computer-executable instructions are executed by the one or more processors, the electronic device is enabled to implement the method according to any one of the first aspect.

According to a third aspect of the present disclosure, a computer-readable medium is provided, having computer-executable instructions stored therein. When the computer-executable instructions are executed, at least one processor is enabled to perform the method according to any one of the first aspect.

According to a fourth aspect of the present disclosure, a computer program product is provided, including computer-executable instructions. When the computer-executable instructions are executed, at least one processor is enabled to perform the method according to any one of the first aspect.

The summary is provided to introduce selection of concepts in a simplified form, and the concepts are further described in the following detailed description. The summary is not intended to identify key features or main features of the present disclosure, and is not intended to limit the scope of the present disclosure.

### BRIEF DESCRIPTION OF THE DRAWINGS

The foregoing characteristics, technical features, advantages, and implementations of the present disclosure are further described below in a clear and understandable manner through descriptions of preferred embodiments with reference to accompanying drawings, where:
FIG. 1 is a schematic diagram of an exemplary industrial knowledge graph according to an embodiment of the present disclosure;
FIG. 2 is a flowchart of an industrial knowledge graph display method according to an embodiment of the present disclosure;
FIG. 3A is a schematic diagram of a six-cornered grid layout based on hexagonal grids according to an embodiment of the present disclosure;
FIG. 3B is a schematic diagram of a six-cornered grid layout based on quadrilateral grids according to an embodiment of the present disclosure;
FIG. 4A is a schematic diagram of an exemplary industrial knowledge graph displayed by using a plurality of icons according to an embodiment of the present disclosure;
FIG. 4B is a schematic diagram of an exemplary industrial knowledge graph displayed by using a plurality of lines according to an embodiment of the present disclosure;
FIG. 4C is a schematic diagram of an industrial knowledge graph with a hidden six-cornered grid layout according to an embodiment of the present disclosure;
FIG. 5 is a schematic diagram of an exemplary industrial knowledge graph displayed in pseudo three-dimensional according to an embodiment of the present disclosure;
FIG. 6 is a schematic diagram of switching between progressive multiple views of an industrial knowledge graph according to an embodiment of the present disclosure;
FIG. 7A is a schematic diagram of a global view of an exemplary industrial knowledge graph according to an embodiment of the present disclosure;
FIG. 7B is a schematic diagram of a local view of an exemplary industrial knowledge graph according to an embodiment of the present disclosure;
FIG. 7C is a schematic diagram of a focused view of an exemplary industrial knowledge graph according to an embodiment of the present disclosure; and
FIG. 8 is a block diagram of an exemplary device that can be used to implement an embodiment of the present disclosure.

List of reference numerals:
110: Grid
120: node
130: edge
310 to 316: hexagonal grids
360 to 366: quadrilateral grids
410: square icon
420: hexagonal icon
430: circular icon
460: broken line
510: square three-dimensional icon
520: hexagonal three-dimensional icon
530: circular three-dimensional icon
610: global view
620: local view
630: focused view
710: central node
801: CPU
802: ROM
803: RAM
804: bus
805: I/O interface
806: input unit
807: output unit
808: storage unit
809: communication unit

### DETAILED DESCRIPTION

The following describes the principle of the present disclosure with reference to several exemplary embodiments shown in the accompanying drawings. Although the preferred embodiments of the present disclosure are shown in the accompanying drawings, it is to be understood that these embodiments are described only to enable a person skilled in the art to better understand and implement the present disclosure, and are not intended to limit the scope of the present disclosure in any way.

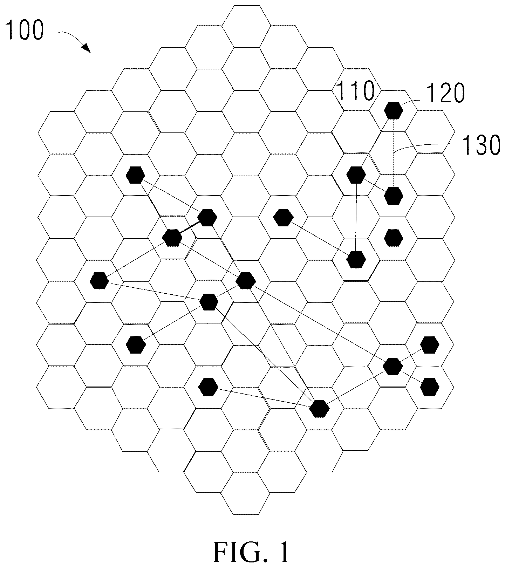

The terms "include" and variants thereof used in this specification represent open inclusion, that is, "include but is not limited to". Unless otherwise specified, the term "or" represents "and/or". The term "based on" represents "at least partially based on". The terms "an exemplary embodiment" and "an embodiment" represent "at least one exemplary embodiment". The term "another embodiment" represents "at least one other embodiment". Other definitions may be included explicitly or implicitly in the following specification. The following describes some exemplary embodiments of the present disclosure with reference to FIG. 1 to FIG. 8.

Knowledge graphs has been widely used in the industry, and has an advantage of good interpretability due to an inherent visual presentation characteristic. A tree-like or mesh-like combination of nodes and edges in an industrial knowledge graph can not only directly describe which knowledge is relevant, but also reveal a semantic relationship behind. Generally, knowledge graphs in industrial software and products use ellipses or circles to represent nodes, and node information is displayed in elliptic or circular text boxes. Straight lines are used to represent edges between nodes, and information about the edges is displayed on the straight lines. Positions of some nodes may be manually set and fixed, and positions of other nodes may be automatically generated. All nodes may be evenly distributed around a core node. A graph center of a knowledge graph is usually placed at an absolute center of a user interface, while all nodes, edges, and related information are displayed.

It can be learned that although the industrial knowledge graph can generally show some knowledge, the industrial knowledge graph is still not user-friendly. Currently, knowledge graph software, applications, or websites in the industry are generally developed based on a developer perspective rather than a user perspective. Therefore, knowledge graphs in the industrial field usually have a lot of content. A conventional industrial knowledge graph presentation manner has a series of problems such as an excessively large information density, overlapping visual elements, and a rigid overall layout. For example, too much displayed information may cause trypophobia for some users, irregular node distribution may cause overlapping between nodes, and strict circles and lines may bring aesthetic fatigue and poor scalability. Therefore, user experience of the conventional industrial knowledge graph is not good.

Therefore, the embodiments of the present disclosure provide a new industrial knowledge graph display method. The method ensures distribution of visual elements based on a six-cornered grid layout (that is, a six-cornered grid panel), displays knowledge in a clear and delicate manner, and can flexibly adapt to design of various visual elements. According to the embodiments of the present disclosure, the six-cornered grid layout is used to assist in display of the industrial knowledge graph, each node is displayed at a center position of each grid, and edges between nodes are displayed by using a plurality of optional connection lines, so that content of the industrial knowledge graph can be presented completely and clearly, thereby greatly improving user experience during display of the knowledge graph.

FIG. 1 is a schematic diagram of an exemplary industrial knowledge graph 100 according to an embodiment of the present disclosure. As shown in FIG. 1, in this embodiment of the present disclosure, a six-cornered grid layout is used to assist in displaying the industrial knowledge graph. The six-cornered grid layout includes a plurality of grids (such as a grid 110) of equal sizes, and each node (such as a node 120) is located in a central area of a grid. The nodes are connected by edges (such as an edge 130) based on a semantic relationship. It is to be understood that, although in the preferred example in FIG. 1, a plurality of hexagonal (especially regular hexagonal) grids (such as the grid 110) are used to form the six-cornered grid layout, which may alternatively be based on another polygon (such as a quadrilateral), it needs to be ensured that six adjacent grids around each non-periphery grid can form a hexagon. In addition, although a hexagonal node icon is preferably shown in FIG. 1, the node icon may alternatively be in another shape or another icon. In some embodiments, the geometric center of the node icon coincides with the geometric center of the grid, and a size of the node icon needs to be less than a size of the grid, to ensure that there is no overlap between different nodes.

A hexagon is a shape with a stable geometric feature. In the six-cornered grid layout shown in FIG. 1, a plurality of grids with a same size are arranged without gaps, and nodes are arranged with reference to the grid layout instead of being randomly placed. Although in FIG. 1, each node is represented by a small hexagon, the node may be any other designed shape, flag, icon, or image. It should be understood that, the industrial knowledge graph 100 in FIG. 1 is an example for describing the embodiments of the present disclosure, and the industrial knowledge graph may include more or fewer nodes and edges.

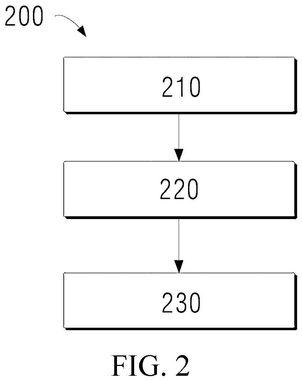

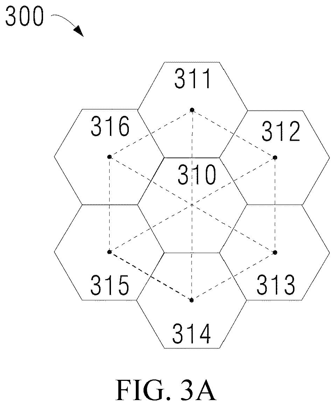

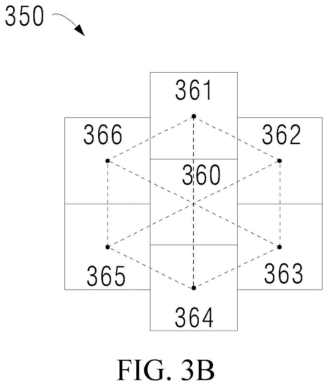

FIG. 2 is a flowchart of an industrial knowledge graph display method 200 according to an embodiment of the present disclosure. The following describes the method 200 with reference to FIG. 1, FIG. 3A, and FIG. 3B. The method 200 may be performed by an electronic device or computer software.

As shown in FIG. 2, in 210, a six-cornered grid layout used for an industrial knowledge graph is determined, where in the six-cornered grid layout, a non-periphery grid is surrounded by six grids, and centers of the six grids form a hexagon. For example, the six-cornered grid layout of the industrial knowledge graph 100 is first divided. The grids in the six-cornered grid layout may be in a plurality of forms, and may include a plurality of hexagonal grids or quadrilateral grids. For each non-periphery grid in the six-cornered grid layout, the grid is completely surrounded by six surrounding grids, and centers of the six adjacent grids are connected to form a hexagon. It is to be understood that, boundary lines of the six-cornered grid layout logically exist, but may be visually presented or hidden. In some embodiments, the six-cornered grid layout may correspond to a six-cornered grid logical coordinate system, including but not limited to: an offset coordinate, a cubic coordinate, an axis coordinate, a double-rectangular coordinate, and the like.

Optionally, each grid in the six-cornered grid layout may be a hexagon, and a hexagon formed by centers of six grids is an equilateral hexagon. FIG. 3A is a schematic diagram of a six-cornered grid layout 300 based on hexagonal grids according to an embodiment of the present disclosure, where each grid has a same shape and a same size. As shown in FIG. 3A, each grid (such as grids 310 to 316) in the six-cornered grid layout 300 is a hexagon, a central grid 310 is surrounded by six adjacent grids 311 to 316, connection lines between centers of the six grids 311 to 316 form an equilateral hexagon, and nodes in the industrial knowledge graph are located at respective centers of one or more of the six grids 311 to 316.

Optionally, each grid in the six-cornered grid layout may be a quadrilateral, and a hexagon formed by centers of six grids is a non-equilateral hexagon. FIG. 3B is a schematic diagram of a six-cornered grid layout 350 based on quadrilateral grids according to an embodiment of the present disclosure. As shown in FIG. 3B, each grid (such as grids 360 to 366) in the six-cornered grid layout 350 is a quadrilateral, a central grid 360 is surrounded by six adjacent grids 361 to 366. Although the six grids 361 to 366 are quadrilateral rather than hexagonal, connection lines between centers of the six grids 361 to 366 form a non-equilateral hexagon, and nodes in the industrial knowledge graph are located at respective centers of one or more of the six grids 361 to 366. Therefore, in the embodiments of the present disclosure, the six-cornered grid layout can be implemented based on grids of a plurality of shapes, and has good flexibility and applicability.

According to the six-cornered grid layout in the embodiments of the present disclosure, the following conditions need to be met: All grids have a same shape and a same size; a non-periphery grid is closely adjacent to six surrounding grids, and there is no gap or almost no gap between the non-periphery grid and the six surrounding grids; centers of six adjacent grids form a hexagon, which may be an equilateral hexagon or a non-equilateral hexagon; and the six-cornered grid layout can be theoretically expanded in a case that the foregoing conditions are satisfied.

Referring to FIG. 2 again, in 220, a plurality of nodes in the industrial knowledge graph are displayed at respective centers of a plurality of grids in the six-cornered grid layout. For example, the node 120 is placed and disposed at a center position of a grid in the industrial knowledge graph 100 in FIG. 1, and other nodes may also be placed and disposed at centers of other grids. According to the industrial knowledge graph in the embodiments of the present disclosure, a semantic represented by the node includes but is not limited to: an entity such as an industrial institution, a facility, a production line, a device, a component, a number, a signal, a product, personnel, construction, a project, a task, or an event; and an abstract description (such as a fault phenomenon, a fault cause, or a solution) that describes a specific industrial phenomenon, or a technical term (such as a technology, an algorithm, or an operation step). According to the embodiments of the present disclosure, each node is located inside a grid in the six-cornered grid layout, and a node does not occupy a plurality of grids, and cannot be located in an area outside the six-cornered grid layout. Two nodes are logically not placed in a same grid, so that it is ensured that the nodes do not visually overlap and are not blocked, thereby improving good user experience.

In 230, a plurality of edges between the plurality of nodes are displayed based on a semantic relationship between the plurality of nodes by using at least one of the following connection lines: a straight line, a broken line, or a curve. For example, a straight line may be used to connect two nodes in the industrial knowledge graph 100. A connection line may be set between nodes as an edge depending on whether there is a semantic relationship between the nodes. In the embodiments of the present disclosure, a plurality of types of connection lines may be used to display edges, lengths of the edges may be different, and connection manners between the edges may also be different. Therefore, there may be a case that the edges intersect with each other.

Therefore, according to the method 200 in the embodiments of the present disclosure, a six-cornered grid layout is used to assist in display of the industrial knowledge graph, each node is displayed at a center position of each grid, and edges between nodes are displayed by using a plurality of optional connection lines, so that content of the industrial knowledge graph can be presented completely and clearly, thereby greatly improving user experience of a user when viewing the knowledge graph. The six-cornered grid layout can be used to specify a distribution manner of the nodes in a particular view, to avoid a suboptimal visual effect.

In addition, according to the method 200 in the embodiments of the present disclosure, based on the six-cornered grid layout, nodes are placed at positions of centers (particularly preferably geometric centers) of the grids, rather than vertices of the grids. In addition, according to the embodiments of the present disclosure, adjacent nodes may be located in adjacent grids, or may be located in non-adjacent grids. In addition to straight lines, the connection lines between the nodes may be presented in a manner such as broken lines and/or curves. In this manner, adjacent nodes of each node can break through a limitation of six, and can be connected to more than six nodes, thereby increasing an application range of the knowledge graph.

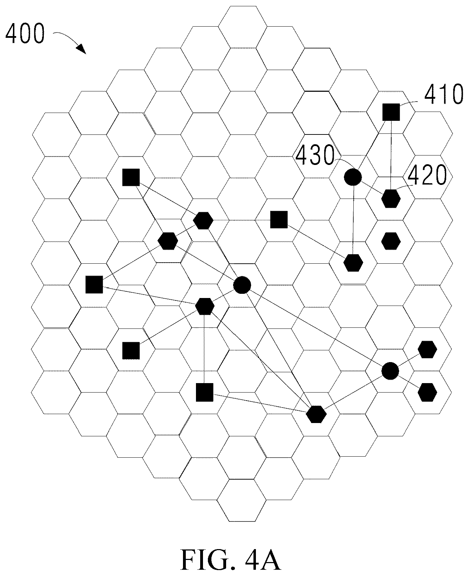

In some embodiments, a first-type node in the plurality of nodes may be displayed by using an icon, and a second-type node in the plurality of nodes may be displayed by using a different icon. In other words, different types of nodes may be displayed by using different icons/graphs. FIG. 4A is a schematic diagram of an industrial knowledge graph 400 displayed by using a plurality of icons according to an embodiment of the present disclosure. As shown in FIG. 4A, nodes in the industrial knowledge graph 400 may be classified into three types, respectively corresponding to, for example, production lines, devices, and personnel. Nodes related to the production line are represented by square icons 410, nodes related to the device are represented by hexagonal icons 420, and nodes related to the personnel are represented by circular icons 430. In this manner, distribution and association of various types of nodes can be intuitively viewed. When display of the industrial knowledge graph is triggered, the six-cornered grid layout is initialized to cover all nodes included in the industrial knowledge graph, and it is ensured that a total quantity of grids is greater than a total quantity of nodes, and one node or no node may be placed in each grid. As shown in FIG. 4A, each hexagonal grid occupies a specific area through an outer boundary of the hexagonal grid, and a visual element (such as a graph or an icon) representing a node is set at a center of the grid and does not exceed the boundary. In addition, the boundary of the grid may logically exist, but is visually invisible (that is, the border of the grid may be hidden and not displayed).

In some embodiments, a first node may be placed in a first grid of the plurality of grids; a second node is placed in a second grid of the plurality of grids, where the second grid is adjacent to the first grid; and a third node is placed in a third grid of the plurality of grids, where the third grid is not adjacent to the first grid or the second grid. For example, a node of the circular icon 430 is adjacent to a node of the hexagonal icon 420, and the two nodes are not adjacent to a node of the square icon 410. In this way, the node may be located in any grid on the checkerboard, and any two nodes may be located in adjacent grids or non-adjacent grids (where an empty grid may exist in the middle), so that the nodes are not particularly dense and crowded, to implement a sparse arrangement manner. In addition, because it is not limited that the nodes need to be adjacent in the industrial knowledge graph in the embodiments of the present disclosure, there may be a case in which edges intersect in a plurality of edges in the industrial knowledge graph in the embodiments of the present disclosure.

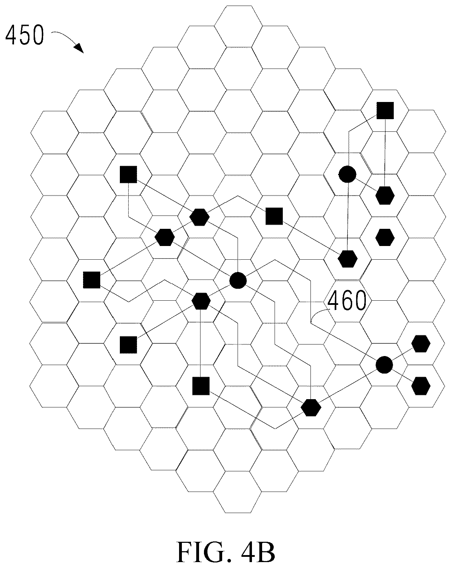

FIG. 4B is a schematic diagram of an industrial knowledge graph 450 displayed by using a plurality of lines according to an embodiment of the present disclosure. According to this embodiment of the present disclosure, a connection line of edges between nodes may be represented not only by a straight line, but also by another connection line such as a broken line or a curve. As shown in FIG. 4B, an edge between two nodes may be represented by a broken line 460. When connected by a broken line, a length of each segment in the broken line may be fixed, and each segment is always a connection line between centers of two adjacent nodes. In this manner, flexibility and aesthetics of the connection line between the nodes are improved. Preferably, when two nodes are not adjacent, a connection line between the two nodes connects center points of adjacent grids of grids in which the two nodes are located. For example, when two nodes are not adjacent, a communication path may be obtained through intermediate grids adjacent to each other, and then a broken line connects all segments, to sequentially connect center points of all adjacent grids in the path.

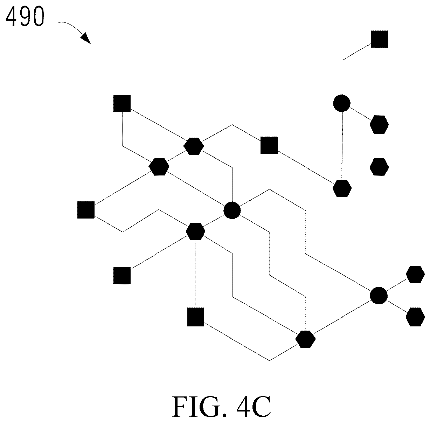

FIG. 4C is a schematic diagram of an industrial knowledge graph 490 with a hidden six-cornered grid layout according to an embodiment of the present disclosure. As shown in FIG. 4C, the six-cornered grid layout may be hidden, but placement of the nodes is still arranged with reference to the hidden six-cornered grid layout. For example, a switch button may be set on the user interface for the user to select to display or hide the six-cornered grid layout. By hiding the six-cornered grid layout, the user can focus more on display of the nodes and the edges in the industrial knowledge graph.

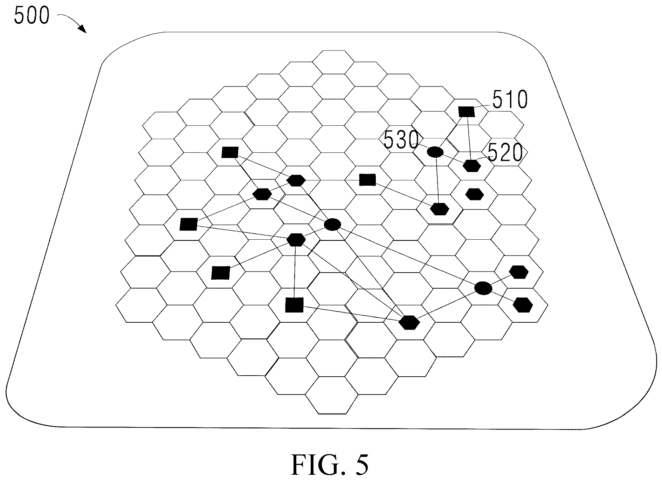

FIG. 5 is a schematic diagram of an industrial knowledge graph 500 displayed in pseudo three-dimensional according to an embodiment of the present disclosure. For example, a pseudo three-dimensional (for example, 2.5-dimensional) industrial knowledge graph 500 may be generated by skewing and rotating the six-cornered grid layout displayed in FIG. 4A by a specific angle, where a square three-dimensional icon 510, a hexagonal three-dimensional icon 520, and a circular three-dimensional icon 530 may be presented three-dimensionally. In some embodiments, the six-cornered grid layout may be skewed clockwise or counterclockwise first, and then rotated clockwise or counterclockwise. Alternatively, the two-dimensional knowledge graph according to the embodiments of the present disclosure may be converted into a three-dimensional knowledge graph by adding height information. It should be understood that, although the industrial knowledge graph is presented in the pseudo three-dimensional or three-dimensional form, the auxiliary six-cornered grid layout may still be displayed or hidden. According to the embodiments of the present disclosure, when the industrial knowledge graph is displayed in the pseudo three-dimensional or three-dimensional effect, display of the industrial knowledge graph is still assisted based on the two-dimensional six-cornered grid layout.

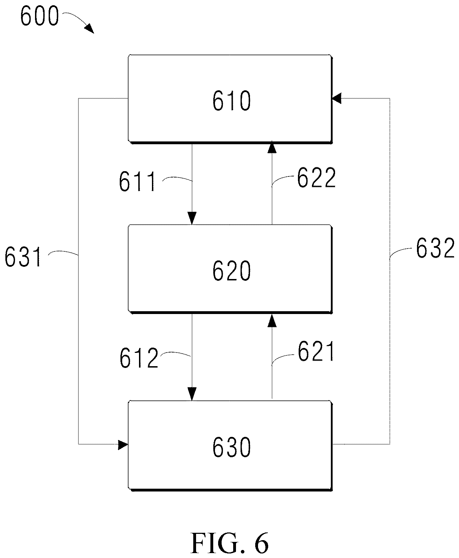

FIG. 6 is a schematic diagram 600 of switching between progressive multiple views of an industrial knowledge graph according to an embodiment of the present disclosure. As shown in FIG. 6, the progressive multiple views include a global view 610, a local view 620, and a focused view 630. Different amounts of information are presented in different views, and a relationship such as zooming in/zoom out is presented between the three views. In some embodiments, display of the global view 610, the local view 620, and the focused view 630 may be assisted by the foregoing six-cornered grid layout. In other words, nodes in the global view 610, the local view 620, and the focused view 630 are all placed with reference to the six-cornered grid layout.

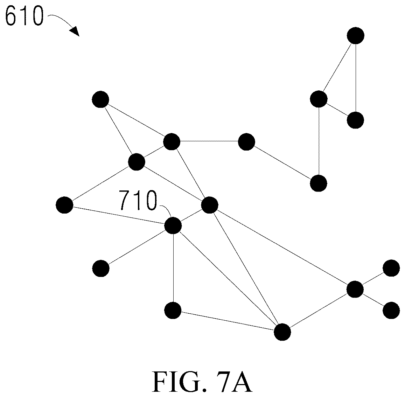

FIG. 7A is a schematic diagram of a global view of an industrial knowledge graph 610 according to an embodiment of the present disclosure. The global view is an overall overview display of the industrial knowledge graph, and may be regarded as an overview. In the global view 610, all nodes and edges in the industrial knowledge graph may be displayed, and related text of at least one of the nodes and the edges is hidden. In this way, an overall clear display effect can be ensured. In some embodiments, in the global view 610, different types of nodes may be displayed by using different icons/graphs. In some embodiments, related nodes in the industrial knowledge graph may be aggregated into a plurality of groups, and the plurality of groups are displayed in the global view in a point cloud manner or a supernode manner, thereby presenting semantic distribution between all nodes. According to the embodiments of the present disclosure, although all nodes are displayed in the global view, text in the nodes and/or the edges is hidden, so that a trypophobia disorder caused by all information displayed densely is reduced.

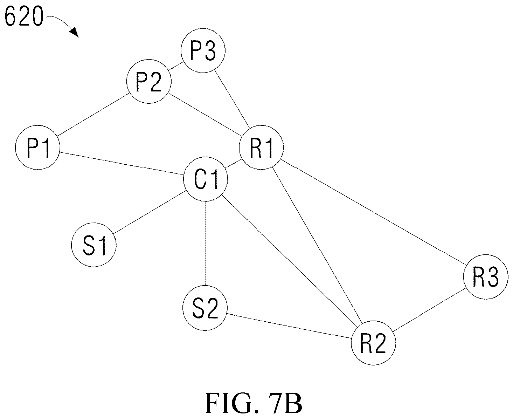

FIG. 7B is a schematic diagram of a local view 620 of an industrial knowledge graph according to an embodiment of the present disclosure. The local view is detailed display of a part of the industrial knowledge graph, and is a main manner of viewing nodes and related node information. In the local view 620, text of at least one of a node and an edge associated with a central node (also referred to as a core node) is displayed. In some embodiments, names of nodes such as C1, R1, P1, and S1 may be displayed in the local view 620.

In some embodiments, in the local view 620, related nodes within a predetermined hops of the central node may be displayed. For example, nodes that are predetermined hops (for example, two hops, where a hop refers to a length of edges on a shortest path between the two nodes) from the central node C1 may be displayed, including nodes P1, P2, P3, R1, R2, R2, S1, and S2, and excluding other nodes shown in FIG. 7A. Alternatively, related nodes whose semantic relationship with the central node is within a predetermined threshold may be presented. In some embodiments, a quantity of the predetermined hops may be configured, so that all nodes included in the local view can be well displayed visually and/or described by using text. For example, on a large-size screen, a threshold of the predetermined hops may be set to be larger; while on a small-size screen, the quantity of the predetermined hops may be set to be smaller. Certainly, the user may alternatively manually configure the quantity of the predetermined hops.

In some embodiments, in the local view 620, the central node may further be switched. For example, when the user selects the node R1, related nodes within a predetermined hops of the node R1 are re-determined, and then the knowledge graph is redrawn. When the node R1 is the central node, the nodes P1, S1, and S2 are not displayed.

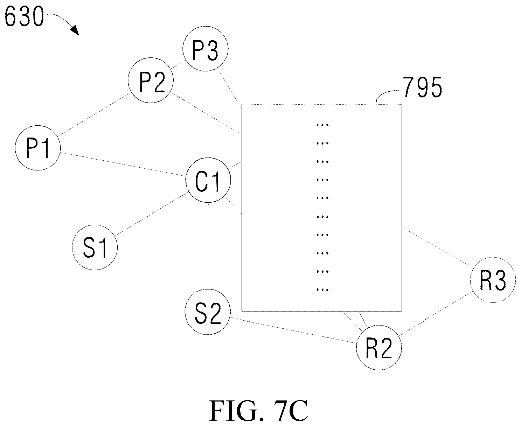

FIG. 7C is a schematic diagram of a focused view 630 of an industrial knowledge graph according to an embodiment of the present disclosure. The focused view is a highlighted presentation of a node in the industrial knowledge graph. In the focused view 630, description information of a central node may be displayed through a window 795. For example, the window 795 may display information such as a name, a type, descriptions, and related nodes of a node C1. In addition, compared with other displayed nodes, the node C1 in focus is highlighted, so that detailed information about the central node on which the user focuses can be comprehensively understood. On the contrary, if there is no separate window to display specific node information, there may be an understanding obstacle caused by incomprehensive information.

Referring to FIG. 6 again, a schematic diagram of switching between progressive multiple views is described. In some embodiments, in the global view 610, if a first user input (for example, a click action for the node 710 in FIG. 7A, or searching for the node 710 through interactive operation) for a node in the industrial knowledge graph is received, switching is performed and the industrial knowledge graph is zoomed in to be displayed in the local view 620, as shown in 611. In the local view 620, if a second user input (for example, a double-click action on the node C1 in FIG. 7B) for a node is received, display is switched to the focused view 630, as shown in 612.

In some embodiments, in the focused view 630, if a third user input (for example, the user zooms out a display instruction in FIG. 7C) is received, display is switched to the local view 620, as shown in 621. In the local view 620, if a fourth user input (for example, the user zooms out or presses a specific key, such as an Esc key, in FIG. 7B) is received, display is switched to the global view 610, as shown in 622.

In some embodiments, switching may alternatively be directly performed between the global view 610 and the focused view 630. In the global view 610, if a fifth user input (for example, a double-click action of the user on the node 710 in FIG. 7A) is received, display is switched to the focused view 630, as shown in 631. In the focused view 630, if a sixth user input (for example, the user zooms out or presses a specific key in FIG. 7C) is received, display is switched to the global view 610, as shown in 632. In this manner, switching between different views can be faster, thereby improving viewing efficiency of the knowledge graph, and satisfying information requirements of various users at various levels.

Optionally, switching between the global view 610, the local view 620, and the focused view 630 may be implemented through mouse clicking and/or keyboard key pressing. Alternatively, in a touch display screen, views may be switched through touch by a finger, pressing duration, zooming, and other operations. According to the embodiments of the present disclosure, the manner of setting the progressive multiple views enables the knowledge graph to be presented with proper information density, to avoid a case that too many visual elements are displayed at the same time, and consequently, the user cannot position some knowledge, or may even trigger a problem of mental or physical discomfort, and to reduce a possibility that the user cannot obtain the information about the knowledge graph.

In addition, when switching is performed from the global view 610 to the local view 620, because sizes, total quantities of grids, and total quantities of nodes in the six-cornered grid layout are different, the industrial knowledge graph needs to be redrawn. When switching is performed from the local view 620 to the focused view 630, the six-cornered grid layout and positions of nodes do not change, so that there is no need to redraw the industrial knowledge graph.

In some embodiments, knowledge graph data may be read from a local device (for example, a computer), to implement the industrial knowledge graph display method according to the embodiments of the present disclosure. Alternatively, the knowledge graph data may be obtained from a cloud (for example, a cloud server or a distributed server), and the industrial knowledge graph in the embodiments of the present disclosure is presented on a local device. In addition, alternatively, a part of the knowledge graph data may be obtained from the cloud, and the other part is read from the local device. This is not limited in the embodiments of the present disclosure.

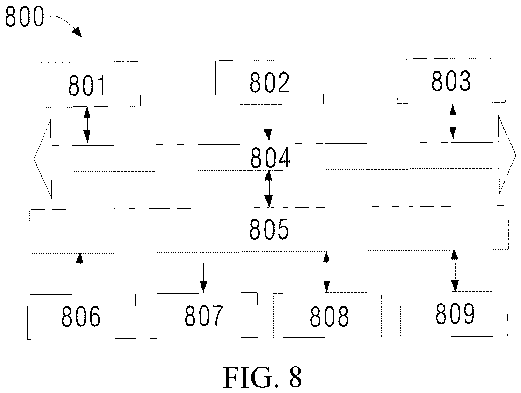

FIG. 8 is a schematic block diagram of an exemplary device 800 that can be used to implement an embodiment of the present disclosure. The device 800 may be used to implement the method 200 described in FIG. 2. For example, the local device and/or the cloud server described above may be implemented by using one or more components in the exemplary device 800. As shown in FIG. 8, the device 800 includes a processor, for example, a central processing unit (CPU) 801, which can perform various appropriate actions and processing according to computer program instructions stored in a read-only memory (ROM) 802 or computer program instructions loaded into a random access memory (RAM) 803 from a storage unit 808. The RAM 803 may further store various programs and data required for operation of the device 800. The CPU 801, the ROM 802, and the RAM 803 are connected to each other through a bus 804. An input/output (I/O) interface 805 is also connected to the bus 804.

A plurality of components in the device 800 are connected to the I/O interface 805, including: an input unit 806, for example, a keyboard or a mouse; an output unit 807, for example, various types of displays or speakers; a storage unit 808, for example, a magnetic disk or an optical disc; and a communication unit 809, for example, a network card, a modem, or a wireless communication transceiver. The communication unit 809 allows the device 800 to exchange information/data with other devices through a computer network such as the Internet and/or various telecommunication networks.

The processing unit 801 performs the methods and processes described above, for example, the method 200. For example, in some embodiments, the method 200 may be implemented as a computer software program or a computer program product, which is tangibly included in a computer-readable medium, such as a non-transient computer-readable medium (for example, the storage unit 808). In some embodiments, a part or all of a computer program may be loaded and/or installed on the device 800 by using the ROM 802 and/or the communication unit 809. When the computer program is loaded on the RAM 803 and executed by the CPU 801, one or more steps in the methods or processes described above may be performed. Alternatively, in other embodiments, the CPU 801 may be configured to perform the method or process according to the embodiments of the present disclosure in any other appropriate manner (for example, by using firmware).

A person skilled in the art should understand that, the steps in the methods of the present disclosure may be implemented by using a general-purpose computing apparatus, may be integrated in a single computing apparatus, or may be distributed on a network including a plurality of computing apparatuses. Optionally, the methods may be implemented by using program code executable by the computing apparatus, so that the methods can be stored in a storage apparatus and executed by the computing apparatus, or the methods are separately manufactured into integrated circuit modules, or a plurality of modules or steps in the methods are manufactured into a single integrated circuit module for implementation. In this way, the present disclosure is not limited to any specific combination of hardware and software. For example, some embodiments of the present disclosure further include program modules and/or integrated circuit modules, configured to perform one or more steps of the method 200 and/or one or more other steps described in other embodiments of the present disclosure. These program modules may be included or embodied in one device, such as the device 800 in FIG. 8.

According to an exemplary implementation of the present disclosure, a computer-readable storage medium is provided, having computer-executable instructions stored therein. The computer-executable instructions are executed by a processor to implement the method described in the foregoing specification. According to an exemplary implementation of the present disclosure, a computer program product is further provided. The computer program product is tangibly stored on a non-transitory computer-readable medium and includes computer-executable instructions, and the computer-executable instructions are executed by a processor to implement the method described in the foregoing specification.

Aspects of the present disclosure are described herein with reference to the flowchart and/or block diagram of the method, the apparatus, the device, and the computer program product implemented in the present disclosure. It is to be understood that each block of the flowchart and/or block diagram and combinations of blocks in the flowchart and/or block diagram can be implemented by computer-readable program instructions.

These computer-readable program instructions may be provided to a processing unit of a general purpose computer, a dedicated computer, or another programmable information presentation apparatus to produce a machine, so that the instructions, when executed through the processing unit of the computer or another programmable information presentation apparatus, generate an apparatus for implementing the functions/actions specified in one or more blocks in the flowchart and/or block diagram. Alternatively, the computer-readable program instructions may be stored in the computer-readable storage medium. The instructions cause the computer, programmable information presentation apparatus, and/or other devices to work in a specific manner, so that a computer-readable medium in which the instructions are stored includes a product including instructions for implementing aspects of the functions/actions specified in one or more blocks in the flowchart and/or block diagram.

The computer-readable program instructions may be loaded onto a computer, another programmable information presentation apparatus, or another device, so that a series of operation steps are performed on the computer, the another programmable information presentation apparatus, or the another device, to generate a computer-implemented process. In this way, the instructions executed on the computer, the another programmable information presentation apparatus, or the another device implement the functions/actions specified in the one or more blocks in the flowchart and/or block diagram in the embodiments of the present disclosure.

The flowchart and block diagram in the accompanying drawings show architectures, functions, and operations that may be implemented by the system, method, and computer program product according to various implementations of the present disclosure. In this regard, each box in the flowchart or the block diagram may represent a module, a program segment, or a part of instructions. The module, the program segment, or the part of instructions includes one or more executable instructions used for implementing specified logic functions. In some implementations used as substitutes, functions annotated in boxes may alternatively occur in a sequence different from that annotated in an accompanying drawing. For example, two boxes in succession may actually be performed basically in parallel, and sometimes the two boxes may be performed in a reverse sequence. This is determined by a related function. It is also to be noted that, each box in a block diagram and/or a flowchart and a combination of boxes in the block diagram and/or the flowchart may be implemented by using a dedicated hardware-based system configured to perform a specified function or action, or may be implemented by using a combination of dedicated hardware and a computer instruction.

The implementations of the present disclosure are described above, and the foregoing descriptions are exemplary but not exhaustive, and are not limited to the disclosed implementations. Without departing from the scope and spirit of the described implementations, many modifications and variations are apparent to a person of ordinary skill in the technical field. The selected terms used herein is intended to best explain the principles of the implementations, practical applications, or improvements of technologies in the market, or to enable another person of ordinary skill in the technical field to understand the implementations disclosed in the present specification.

## Claims

1. An industrial knowledge graph display method (200), comprising:
determining (210) a six-cornered grid layout used for an industrial knowledge graph, wherein in the six-cornered grid layout, a non-periphery grid is surrounded by six grids, and centers of the six grids form a hexagon;
displaying (220) a plurality of nodes in the industrial knowledge graph at respective centers of a plurality of grids in the six-cornered grid layout; and
displaying (230) a plurality of edges between the plurality of nodes based on a semantic relationship between the plurality of nodes by using at least one of the following connection lines: a straight line, a broken line, or a curve.

2. The method (200) according to claim 1, wherein the non-periphery grid (310) and the six grids (311, 312, 313, 314, 315, 316) are all hexagons, and the hexagon formed by the centers of the six grids is an equilateral hexagon.

3. The method (200) according to claim 1, wherein the non-periphery grid (360) and the six grids (361, 362, 363, 364, 365, 366) are all quadrilaterals, and the hexagon formed by the centers of the six grids is a non-equilateral hexagon.

4. The method (200) according to claim 1, wherein the displaying a plurality of nodes in the industrial knowledge graph at respective centers of a plurality of grids in the six-cornered grid layout comprises:
placing a first node in a first grid of the plurality of grids;
placing a second node in a second grid of the plurality of grids, wherein the second grid is adjacent to the first grid; and
placing a third node in a third grid of the plurality of grids, wherein the third grid is not adjacent to the first grid or the second grid.

5. The method (200) according to claim 1, further comprising:
displaying the industrial knowledge graph in a pseudo three-dimensional or three-dimensional form by skewing and rotating the six-cornered grid layout.

6. The method (200) according to claim 1, further comprising:
displaying the industrial knowledge graph in a global view (610), wherein in the global view (610), text of at least one of the plurality of nodes and the plurality of edges is hidden;
displaying the industrial knowledge graph in a local view (620) in response to receiving a first user input for a first node (710) of the plurality of nodes in the global view (610), wherein in the local view (620), text of at least one of a node and an edge associated with the first node (710) is displayed; and
displaying the industrial knowledge graph in a focused view (630) in response to receiving a second user input for the first node (710) in the local view (620), wherein in the focused view (630), description information of the first node (710) is displayed through a window.

7. The method (200) according to claim 6, further comprising:
displaying the industrial knowledge graph in the local view (620) in response to receiving a third user input in the focused view (630); and
displaying the industrial knowledge graph in the global view (610) in response to receiving a fourth user input in the local view (620).

8. The method (200) according to claim 7, further comprising:
displaying the industrial knowledge graph in the focused view (630) in response to receiving a fifth user input for the first node (710) in the global view (610); and
displaying the industrial knowledge graph in the global view (610) in response to receiving a sixth user input in the focused view (630).

9. The method (200) according to claim 6, wherein the displaying the industrial knowledge graph in a global view (610) comprises:
displaying a first-type node in the plurality of nodes as a first icon (410); and
displaying a second-type node in the plurality of nodes as a second icon (420), wherein the second icon (420) is different from the first icon (410).

10. The method (200) according to claim 6, wherein the displaying the industrial knowledge graph in a global view (610) comprises:
aggregating the plurality of nodes into a plurality of groups; and
displaying the plurality of groups in the global view (610) in a point cloud manner.

11. The method (200) according to claim 6, wherein the displaying the industrial knowledge graph in a local view (620) comprises:
determining a first group of related nodes within a predetermined hops of the first node (710); and
displaying the first group of related nodes and text thereof in the local view (620).

12. The method (200) according to claim 11, wherein the displaying the industrial knowledge graph in a local view (620) further comprises:
in response to receiving selection for a second node in the local view (620),
determining a second group of related nodes within a predetermined hops of the second node; and
displaying the second group of related nodes and text thereof in the local view (620).

13. The method (200) according to claim 6, wherein the displaying the industrial knowledge graph in a focused view (630) comprises:
highlighting the first node (710) compared with another displayed node in the focused view (630).

14. An electronic device (800), wherein the electronic device (800) comprises:
one or more processors (801); and
a memory (803), configured to store computer-executable instructions, wherein when executed by the one or more processors (801), the computer-executable instructions enable the electronic device (800) to implement the method according to any one of claims 1 to 13.

15. A computer-readable storage medium (803), having computer-executable instructions stored therein, wherein when the computer-executable instructions are executed by a processor (801), the method according to any one of claims 1 to 13 is implemented.

16. A computer program product, comprising computer-executable instructions, wherein when the computer-executable instructions are executed by a processor (801), the method according to any one of claims 1 to 13 is implemented.
